# EUROPEAN PATENT APPLICATION

(11) **EP 3 171 551 A1**
(43) Date of publication of application: **24.05.2017**
(21) Application number: 16200910.4
(22) Date of filing: 09.10.2014
(51) Int. Cl.: H04L 12/40, H04L 12/437, H04L 12/24, H01M 10/00

(54) **DAISY-CHAIN COMMUNICATION BUS AND PROTOCOL**

(30) Priority: 10.10.2013 US 201361889408 P; 16.12.2013 US 201314107360
(62) Divisional of application: 14188349.6
(71) Applicant: Datang NXP Semiconductors Co., Ltd., County Town of Rudong County Jiangsu 226400 (CN)
(72) Inventor: DE GREEF, Petrus Maria, 5583 GR WAALRE (NL); VAN LAMMEREN, Johannes Petrus Maria, 6642 BK BEUNINGEN (NL); LAMMERS, Matheus Johannus Gerardus, 6031 EA NEDERWEERT (NL)
(74) Representative: EP&C

(57) **Abstract**

An apparatus is provided that includes first and second connection nodes and a communication circuit. The communication circuit is configured to communicate cell-status data of a cell over a bidirectional data path connected to the connection nodes. The communication circuit includes directional drive circuitry configured to communicate the cell-status data over the bi-directional data path by communicating the cell-status data via the first connection node to first-side circuitry in the one direction of the bi-directional data path and, in response to an indication that the bidirectional data path is faulty, by communicating via the second connection node to second-side circuitry along the other direction of the bi-directional data path. The communication circuit also includes a communication-protocol circuit configured to control the directional drive circuitry. The apparatus may be connected in-series with other like apparatuses in the bi-directional data path.

## Description

Aspects of the present disclosure relate to the addressing of communication devices in a communication network. A variety of communication networks are used in different applications and environments. For example, industrial, automotive, and other industries have used communications networks to facilitate the control of and/or communication between various devices. These communications have been increasingly used to suit various needs. In particular, the automotive industry has seen increased use of network communications for a variety of uses, such as for controlling communication circuits relating to the operation of a vehicle.

Battery management systems are well-suited for use in electric vehicles (both fully-electric and hybrid), and other arrangements in which it is desirable to control the battery to improve performance. Electric vehicles are propelled by electric motors, and are energized by a set of batteries. Typically about 100 lithium-ion battery cells (collectively in a battery or battery pack) store the energy required to drive the vehicle. The batteries can be charged by the power grid or an internal combustion engine (e.g., as a hybrid engine or a range extender).

For optimal performance, one or more battery properties may be monitored including, e.g., state-of-charge, state-of-function and state-of-health. This information can be used to inform the driver of the vehicle's estimated remaining driving range (a fuel gauge function) and the probability of the vehicle being able to reach the desired destination. Also, this information can be used by the battery manager to improve the performance of the battery, which is critical for any electric vehicle due to the relatively short driving range and limitations on the ability to recharge the battery. In order to accomplish this, the battery manager should be able to communicate with the battery cells.

In the automotive market, various communication bus systems exist. For instance, automobiles may contain a LIN bus for low-cost body electronics, a CAN bus for mainstream power-train communications, and a FlexRay bus for high-end applications. Each such bus is used with suitable vehicle components, and each component will have a transceiver for effecting communication via the bus.

Aspects of the present disclosure relate generally to methods, circuits and devices for the communication of data to and from communication circuits via a bi-directional data path.

In some embodiments, an apparatus is provided that includes first and second connection nodes, which are each configured to communicate cell-status data along one of two directions in a bi-directional data path. The cell-status data characterizes at least one of a plurality of cells. The apparatus also includes a communication circuit connected to each of the first and second connection nodes. The communication circuit includes directional drive circuitry configured to communicate the cell-status data over the bi-directional data path by communicating the cell-status data via the first connection node to first-side circuitry in a first direction of the bi-directional data path and, in response to an indication that the bi-directional data path is faulty, by communicating via the second connection node to second-side circuitry in a second direction of the bi-directional data path. The communication circuit also includes a communication-protocol circuit configured to control the directional drive circuitry.

The apparatus may be adapted for data communication in a number of applications. For instance, a plurality of the communication circuits may be connected in series to form a daisy-chain bus that may be used to communicate data to and from various circuits connected to the communication circuits.

In some embodiments, an apparatus is provided that includes a plurality of battery sections. Each section includes a battery cell and first and second communication nodes. The plurality of battery sections are connected in series to form a daisy-chain bus having a first end and a second end. Each battery section includes a communication circuit connected to the battery cell and configured to communicate cell-status data characterizing the battery cell over the daisy-chain bus. The communication circuit is configured to communicate the cell-status data via the first connection node and, in response to an indication that the daisy-chain bus is faulty, communicate the cell-status via the second connection node. The apparatus also includes a battery manager circuit configured to control the plurality of battery sections based on the cell-status data characterizing cells of the plurality of sections, and a communication interface circuit coupled to the battery manager circuit and the first and second ends of the daisy-chain bus. The communication interface circuit is configured to communicate data between the battery manager circuit and the communication circuits of the plurality of sections via the daisy-chain bus.

In some embodiments, an apparatus is provided that includes a manager circuit and a plurality of sections. Each section includes a respective cell and a respective communication circuit connected to the cell and configured to communicate cell-status data characterizing the cell in a first direction over a bi-directional serial daisy-chain bus to the manager circuit. In response to an indication that the bi-directional data path is faulty, the communication circuit is configured to communicate the cell-status data in a second direction over the bi-directional serial daisy-chain bus to the manager circuit.

The above summary is not intended to describe each embodiment or every implementation of the present disclosure. The figures, detailed description, and claims that follow more particularly exemplify various embodiments.

Aspects of the present disclosure may be more completely understood in consideration of the detailed description of various embodiments that follows, in connection with the accompanying drawings, in which:
FIG. 1A shows a first battery section configured to communicate data regarding a battery cell over a bi-directional communication path;
FIG. 1B shows a second battery section configured to communicate data regarding a battery cell over a bi-directional communication path;
FIG. 1C shows a circuit diagram of a first fault tolerant system for communicating data in a battery including a plurality of battery sections;
FIG. 1D shows a circuit diagram of a second fault tolerant system for communicating data in a battery including a plurality of battery sections;
FIG. 2 shows a schematic diagram reflecting communication between two adjacent battery cell communication nodes;
FIGs. 3A and 3B show schematic diagrams reflecting operation of the battery system in shift mode and through mode, respectively;
FIG. 4 shows a timing diagram showing data flow according to one embodiment;
FIG. 5 shows a flowchart for communication of data via first and second ends of a daisy-chain bus, based on responsiveness of communication circuits in the daisy-chain bus;
FIG. 6 shows a flowchart depicting the sending of command messages; and
FIG. 7 shows a flowchart depicting the sending of confirmation messages.

While the disclosure is amenable to various modifications and alternative forms, specifics thereof have been shown by way of example in the drawings and will be described in detail. It should be understood, however, that the intention is not to limit the disclosure to the particular embodiments described. On the contrary, the intention is to cover all modifications, equivalents, and alternatives falling within the scope of the disclosure including aspects defined in the claims. While the present disclosure is not necessarily limited in this context, various aspects of the disclosure may be appreciated through a discussion of related examples.

Aspects of the present disclosure generally relate to methods, circuits and devices for the communication of data to and from communication circuits via a bi-directional data path. In some embodiments, an apparatus is provided that may be connected in-series with other similar apparatuses to form a bi-directional data path (e.g., a daisy-chain bus). The apparatus includes first and second connection nodes, which are each configured to communicate cell-status data along one of two directions in the bi-directional data path. The cell-status data characterizes one or more aspects of a cell. Alternatively, or additionally, the apparatus may be used to communicate data generated by a logic circuit over the bi-directional data path. The apparatus includes a communication circuit connected to each of the first and second connection nodes. The communication circuit includes directional drive circuitry configured to communicate the cell-status data over the bi-directional data path via the first connection node to first-side circuitry in a first direction of the bi-directional data path and, in response to an indication that the bi-directional data path is faulty, communicate the cell-status data to second-side circuitry via the second connection node in a second direction of the bi-directional data path. The communication circuit also includes a communication-protocol circuit configured to control the directional drive circuitry.

The apparatus may be adapted for data communication in a number of applications. For instance, a plurality of the communication circuits are connected in series to form a daisy-chain bus that may be used to communicate data to and from various circuits connected to the communication circuits. For example, in some embodiments, the apparatus may be adapted for communication of data to and from individual sections of a plurality of sections in a battery pack. Each of the battery sections includes a respective cell, a respective first connection node, a respective second connection node, and a respective communication circuit as described above. The plurality of sections of the battery pack are connected in series, via the first and second connection nodes of the plurality of sections, to form a daisy-chain bus having the first connection node of the first one of the plurality of sections at a first end of the daisy-chain bus and having the second connection node of a second one of the plurality of sections at a second end of the daisy-chain bus.

In some embodiments, the apparatus includes a battery manager circuit configured to control the plurality of sections in response to the cell-status data. In some implementations, the apparatus also includes a communication interface circuit coupled to the battery manager circuit and the first and second ends of the daisy-chain bus. The communication interface is configured to communicate data between the battery manager circuit and the communication circuits of the plurality of sections, via the daisy-chain bus.

In some implementations, the communication interface circuit is configured to operate in first and second modes based on the responsiveness of the communication circuits in the daisy-chain bus. While operating in the first mode, the communication interface communicates the data between the battery manager circuit and each of the communication circuits via the first end of the daisy-chain bus. The communication interface transitions to the second mode in response to one or more of the communication circuits in the daisy-chain bus becoming unresponsive. While operating in the second mode, the communication interface communicates the data between the battery manager circuit and a first subset of the communication circuits via the first end of the daisy-chain bus. In this mode, the communication interface also communicates the data between the battery manager circuit and a second subset of the communication circuits via the second end of the daisy-chain bus. The connection between the first and second subset of the communication circuits is also disabled.

In various embodiments, adjacent pairs of communication circuits in the daisy-chain bus may communicate using various communication protocols. In some embodiments, the adjacent pairs of communication circuits are configured to communicate with each other using a master-slave communication protocol. For instance, each communication circuit in the daisy-chain bus may provide a master-interface as one of the connection nodes and a slave-interface at the other connection node. The communication circuits are connected together in series, master-interface to slave-interface, to form the daisy-chain bus.

In some embodiments, each communication circuit in the daisy-chain bus operates in a respective voltage domain, corresponding to the battery cell connected thereto. This can create a large DC voltage difference between the first and second ends of the daisy-chain bus. To avoid damage caused by the DC voltage difference, the communication interface may include an isolation circuit configured to pass data between the communication circuit and the second end of the daisy-chain bus while also providing DC isolation between the communication circuit and the second end. Isolation may be provided, *e.g.,* using capacitive, inductive, and/or optical coupling.

In some embodiments, the communication circuits may be configured to communicate various cell-status data, characterizing battery cells of a multi-cell battery pack, to the battery manager. For instance, in some implementations, the communication circuits may provide a measurement of current, voltage, power, and/or temperature of a respective cell.

In some embodiments, the communication circuits are configurable to communicate data to the battery manager over the daisy-chain bus in either a first direction, via the first end of the daisy-chain bus, or in a second direction, via the second end of the daisy-chain bus. The direction may be selected, for example, by the battery manager circuit. In some implementations, the communication circuits are each configured to communicate the cell-status data to the battery manager, in response to receiving a data command from the battery manager. For instance, the communication circuits may be configured to transmit cell status data via the communication node from which the data command is received.

In various embodiments, the battery manager may utilize a number of different data commands to communicate data to/from the communication circuits in the daisy-chain bus. For instance, in one example, the battery manager transmits a first type of data command to prompt all of the communication circuits to provide cell-status data.

As another example, the battery manager may transmit a second type of data command to request cell-status data from a particular one of communication circuits to provide cell-status data. For instance, in some implementations, the communication circuits are configured to provide the cell-status data if the second type of data command includes a respective unique identifier of the communication circuit and/or section. Otherwise, the communication circuits transmit an acknowledgement of the second data message.

In some embodiments, the battery manager may issue a third data command to prompt the communication circuits to split the daisy-chain bus at a particular connection in the daisy-chain bus. For instance, the battery manager may take such action in response to detecting that the particular connection is broken or has reduced bandwidth. In some embodiments, the battery manager may prompt the communication circuits to split the daisy-chain bus in order to double the available bandwidth, by simultaneously communicating different sets of data via each of the two respective ends of the data bus. In response to the third data command, a first subset of the communication circuits is configured to communicate data via the first end and a second subset of the communication circuits is configured to communicate data via the second end. A connection between the first and second subsets is disabled-thereby splitting the daisy-chain bus into two isolated daisy-chain buses. Various embodiments may alternatively/additionally utilize other commands to communicate data to/from the communication circuits.

The various embodiments may be adapted for communication with several different types of circuits over a bidirectional data path (e.g., a daisy-chain bus). For ease of explanation, the examples herein are primarily described with reference to communication of data to and from a plurality of cells in a multi-cell battery pack.

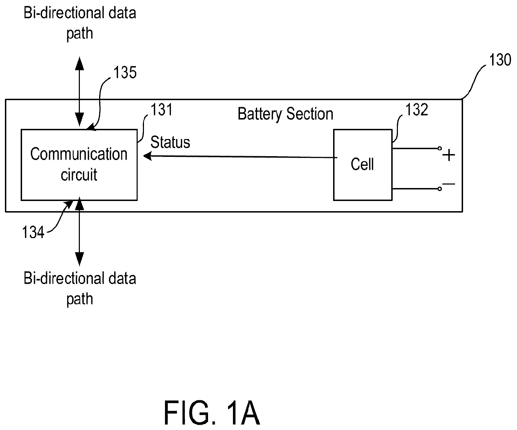

Turning now to the figures, FIG. 1A shows a first battery section configured to communicate data regarding a battery cell over a bi-directional communication path. The battery section 130 includes a cell 132 and a communication circuit 131 configured to communicate cell-status data characterizing the cell on a bi-directional data path. The communication circuit 131 is connected to respective first and second connection nodes 134 and 135, which are each configured to communicate the cell-status data along one of two directions in a bi-directional data path. The communication circuit is configured to communicate the cell-status data in a first direction over the bi-directional data path via the first connection. In response to an indication that the bi-directional data path is faulty, the communication circuit is configured to communicate the cell-status data in a second direction over the bi-directional data path via the second connection.

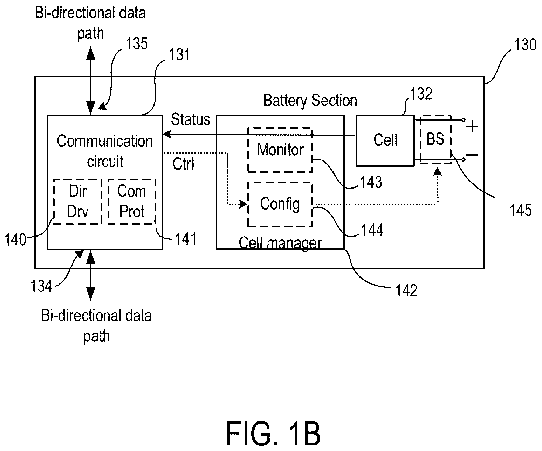

FIG. 1 B shows a second battery section configured to communicate data regarding a battery cell over a bi-directional communication path. Similar to FIG. 1A, the battery section 130 includes a cell 132 and a communication circuit 131 configured to communicate cell-status data characterizing the cell, on a bi-directional data path via respective first and second connection nodes 134 and 135. In this example, the communication circuit 131 includes a directional drive circuit 140 configured to communicate the cell-status data in a first direction over the bi-directional data path via the first connection node 134 and, in response to an indication that the bi-directional data path is faulty, communicate the cell status data in a second direction over the bi-directional data path via the second connection node 135. The communication circuit also includes a communication-protocol circuit 141 configured to control the directional drive circuit 140 (*e.g.,* in response to data commands received via the bi-directional data path).

In some implementations, the battery section also includes a cell manager, configured to monitor and/or control the cell 132. In the example shown in FIG. 1 B, the cell manager includes a monitor circuit 143, configured to measure various characteristics of the cell 132, such as current, voltage, and/or temperature of the cell. The monitor circuit 143 is configured to convert the measurements to digital values and provide the results as cell-status signals to the communication circuit. In some implementations, a cell manager 142 includes a configuration circuit 144 configured to control/adjust the cell in response to control signals received over the bi-directional communication path. For example, in this illustration, the configuration circuit is configured to open and close a bypass switch 145 to connect/bypass the cell 132 to/from a circuit (*e.g*., a multi-cell battery). In various implementations, the cell manager may be adapted to monitor and/or control other various aspects of a cell and/or circuit.

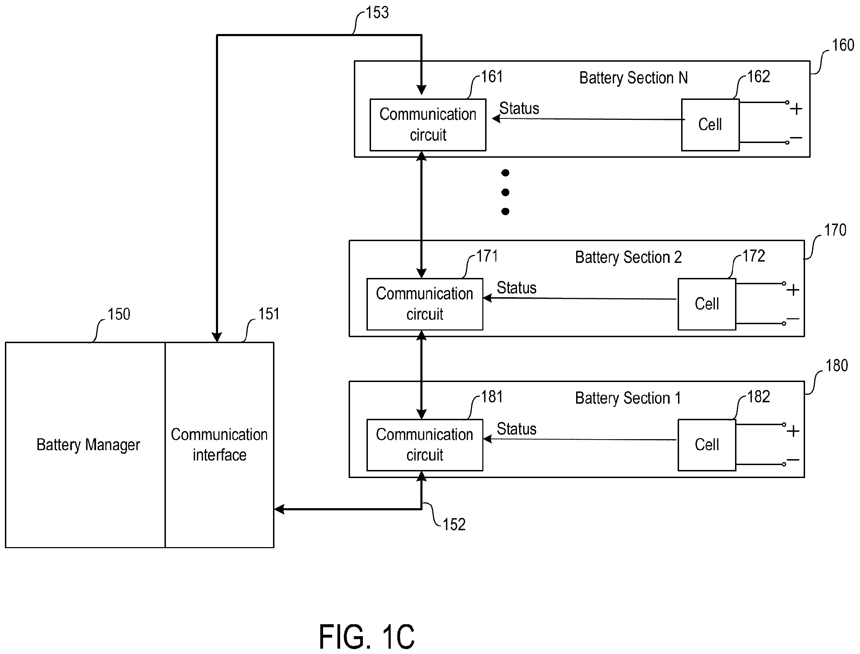

FIG. 1C shows a circuit diagram of a first fault tolerant system for communicating data in a battery having a plurality of battery sections. The system includes a plurality of battery sections 160, 170, and 180. Each section includes a respective communication circuit 161, 171, and 181 and a respective battery cell 162, 172, and 182 as described, *e.g.,* with reference to FIGs. 1A and FIG. 1 B. Communication circuits 161, 171, and 181 of the plurality of battery sections 160, 170, and 180 are connected in series to form a daisy-chain bus having a first end 152 and a second end 153.

In each battery section 160, 170, and 180, the respective communication circuit 161, 171, and 181 is connected to the respective battery cell 162, 172, and 182, and is configured to communicate cell-status data characterizing the battery cell over the daisy-chain bus to a battery manager circuit 150. The battery manager circuit 150 is configured to control the plurality of battery sections 160, 170, and 180 based on the cell-status data characterizing the cells of the plurality of sections. In this example, a communication interface circuit 151 is coupled to the battery manager circuit 150 and to the first and second ends 152 and 153 of the daisy-chain bus. The communication interface circuit 151 is configured to communicate data between the battery manager circuit and the communication circuits of the plurality of sections via the daisy-chain bus. In some embodiments, the communication interface circuit may be incorporated into circuitry of the battery manager 150.

The communication circuits 161, 171, and 181 in the daisy-chain bus each have a first and a second communication node. Each of the communication circuits 161, 171, and 181 are configured to forward data received from one communication node via the other communication node. In this manner, data commands are transmitted from the battery manager 150, through the daisy-chain bus to each communication circuit, and data transmitted by any of the communication circuits is provided to the battery manager 150 via the daisy-chain bus.

The communication circuits 161, 171, and 181 are configurable to communicate data to the battery manager over the daisy-chain bus in either a first direction via the first end 152 of the daisy-chain bus or in a second direction via the second end 153 of the daisy-chain bus. The direction may be selected, for example, by the battery manager circuit 150. In some implementations, the communication circuits 161, 171, and 181 are each configured to communicate the cell-status data to the battery manager, in response to receiving a data command from the battery manager. More specifically, the communication circuits 161, 171, and 181 are each configured to transmit cell status data via the communication node from which the data command is received. This arrangement allows the battery manager 150 and/or communication interface 151 to request and receive cell-status data via either of the ends 152 and 153 of the daisy-chain bus.

In some embodiments, the communication interface 151 is configured to communicate the data between the communication circuits 161, 171, and 181 and the battery manager 150 via the first end 152 of the daisy-chain bus while operating in a first mode. However, one or more of the communication circuits may become unable to communicate via the first end 152 of the daisy-chain bus. For example, a connection between two communication circuits in the daisy-chain bus may be broken or become too noisy to communicate. In response to one or more of the communication circuits becoming unresponsive, the communication interface 151 is configured to operate in a second mode in which data is communicated between a first subset of the communication circuits 161, 171, and 181 and the battery manager 150 via the first end 152 of the daisy-chain bus, and data is communicated between a second subset of the communication circuits and the battery manager via the second end 153 of the daisy-chain bus.

As an illustrative example, if the connection between communication circuits 161 and 171 in the daisy-chain bus is broken, the communication circuit 161 will become unresponsive to data commands communicated from the battery manager via the first end 152 of the daisy-chain bus. In response to the communication interface 151 and/or battery manager 150 detecting that the communication circuit 161 is unresponsive, the communication interface 151 is set to operate in the second mode. While operating in the second mode, the communication interface 151 transmits data commands from the battery manager via both ends 152 and 153 of the daisy-chain bus. Communication circuits 171 and 181 receive the data command via the first end 152 and the communication circuit 161 receives the data command via the second end 153. Data responses are communicated from communication circuits 171 and 181 to the communication interface 151 via the first end 152. A data response is communicated from communication circuit 161 to the communication interface 151 via the second end 153. In this manner, the battery manager is able to continue communicating with each of the communication circuits, in-spite of the connection break in the daisy-chain bus.

In various embodiments, the battery manager 150 may utilize a number of different data commands to request data and/or control circuits of the battery sections 160, 170, and 180. For instance, in one example, the battery manager transmits a first type of data command to prompt all of the communication circuits 161, 171, and 181 to provide cell-status data regarding the cell 162, 172, and 182 of the corresponding section 160, 170, and 180. The battery manager 150 transmits a second type of data command to request a particular one of the communication circuits to provide cell-status data. For instance, in some implementations the communication circuits 161, 171, and 181 are configured to provide the cell-status data if the second data command includes a unique identifier of the communication circuit and/or section. Otherwise, the communication circuits 161, 171, and 181 transmit an acknowledgement of the second data message.

Further, in some embodiments, the battery manager 150 may issue a third data command causing the communication circuits 161, 171, and 181 to split the daisy-chain bus at a particular connection in the daisy-chain bus. For instance, the battery manager 150 may take such action in response to detecting that the particular connection is broken or has reduced bandwidth. In some embodiments, the battery manager 150 may prompt the communication circuits 161, 171, and 181 to split the daisy-chain bus in order to double the available bandwidth, by simultaneously communicating different respective sets of data over the two respective ends of the data bus. In response to the third data command, a first subset of the communication circuits are configured to communicate data via the first end 152 and a second subset (including the other ones of the communication circuits) are configured to communicate data via the second end 153. The communication circuits 161, 171, and 181 are also configured to disable the communication path in the daisy-chain bus connecting the first and second subsets of communication circuits-thereby splitting the daisy-chain bus into two isolated daisy-chain buses. Other, various data commands may also be used to request data from and/or control circuits of the sections 160, 170, and 180.

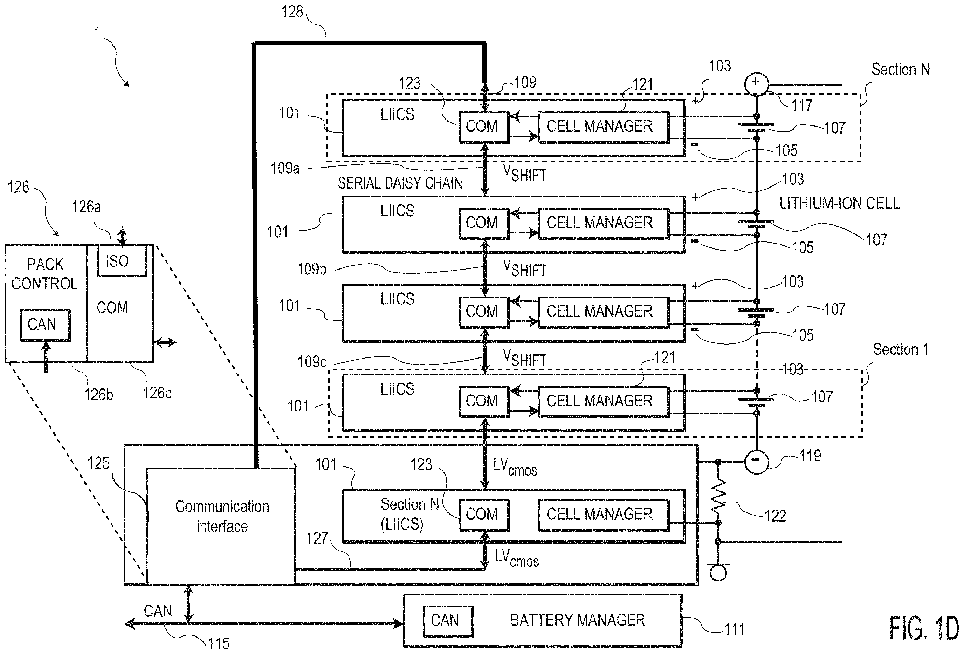

FIG. 1D shows a circuit diagram of a second fault tolerant system for communication data in a battery including a plurality of battery sections. The system includes a plurality of battery sections (section 1 through section N). Each section includes a respective battery cell 107 which is controlled/monitored by a lithium-ion in-cell supervisor (LIICS) circuit 101. As shown in section N, each LIICS circuit includes a cell manager 121 for monitoring and controlling the associated battery cell 107, and a communication circuit 123. As described with reference to FIG. 1C, the communication circuits 123 are connected together in series to form a bi-directional data path (*e.g.,* daisy-chain bus 109) for communication. The daisy-chain bus 109 is used to send control data from the battery manager 111 towards each of the LIICS devices 101 and to receive at the battery manager 111 measurement data (*e.g.,* cell-status data) sent from each of the LIICS devices 101.

In this example, a communication interface 125 is coupled to the battery manager 111 and to the respective first and second ends 127 and 128 of the daisy-chain bus. The communication interface 125 is configured to communicate data between the battery manager circuit and the communication circuits of the plurality of LIICS devices via the daisy-chain bus 109.

One possible implementation of the communication interface 125 is shown by circuit 126. In this example, the circuit 126 includes a communication circuit 126cconfigured to communicate data via first and second ends of the daisy-chain bus 109. As described in more detail in the following, the LIICS devices may operate in respective voltage domains-creating a large DC voltage difference between the first and second ends of the daisy-chain bus 109. To avoid damage caused by the DC voltage difference, the communication circuit 126c of the communication interface may include an isolation circuit 126a (*e.g.,* a galvanic isolation circuit) configured to pass data between the communication circuit 126c and the second end 128 while also providing DC isolation between the communication circuit 126c and the first end 127. Isolation may be provided, *e.g.,* using capacitive, inductive, and/or optical coupling. This circuit 126 also includes a pack controller 126b configured to receive control commands from the battery manager 111 via CAN bus 115. Various features of the pack controller 126b are described in more detail in the following description of FIG. 1 D.

As one pertinent feature of the daisy-chain bus 109 in FIG. 1 D, data may be communicated to/from the communication circuits of the LIICS devices via either a first end 127 of the daisy-chain bus or a second end 128 of the daisy-chain bus. As described with reference to FIG. 1C, this feature allows communication to continue when a connection in the daisy-chain bus 109 becomes broken. This feature also allows the daisy-chain bus 109 to be split into two independent buses in order to increase the bandwidth available for communications.

Some other features of the daisy-chain bus that may be implemented are: 1) host control of timing synchronization of the daisy-chain bused LIICS devices; 2) through-mode communication from the host to the LIICS devices-reducing latency; 3) shift-mode communication from the LIICS devices to the host-enabling a balanced timing budget for both near and remote LIICS devices, and thereby avoiding latency issues; 4) reduced mechanical complexity for both the battery cells and battery pack; and 5) good matching with the electric constraints of the cascaded battery cells (stacked voltages).

The system shown in FIG. 1 D may be used to implement a multi-cell battery pack. By way of example and not limitation, LIICS device 101 is an integrated circuit (IC) (not shown) mounted on a lead-frame (not shown), preferably molded inside the battery cell 107, and connected between the two poles 103, 105 of the battery cell 107. As shown in FIG. 1 D, each battery cell (e.g., 107) has an associated LIICS device 101. Each LIICS device 101 may be powered by the associated local battery cell's voltage, which simplifies the system by avoiding the need for a dedicated power system configured to drive each of the LIICS devices. A bidirectional daisy-chain bus 109 is provided to enable communication between each of the LIICS devices 101 and the battery manager 111.

The battery cells 107 are cascaded in series, which results in a high working voltage between the two external battery terminals 117, 119 (*e.g.,* < 1000 V), as this limits the current (*e.g.* < 100 Amperes) supplied to the vehicle's electric motor(s) (not shown). The series cell voltage configuration causes all but the first of the LIICS devices 101 to have a voltage offset with respect to ground. Yet, the voltage offset between two adjacent battery cells 107 is limited to a single cell voltage (Vbat = typically 3-4 V). Optionally, 2 or more (n) cells can be connected to a single LIICS device. This LIICS device is the same as the single cell device and shares its parameters on n sets of registers in this LIICS device.

By configuring the communication interface as a daisy-chain bus between successive LIICS devices 101, each bus interface 109a, 109b, 109c... needs to span only a single battery voltage (Vbat). The physical connection between two adjacent LIICS devices 101 therefore must accommodate a level-shift in the voltage of the interface signal. This arrangement avoids the need for expensive high-voltage components or galvanic isolation.

The pack controller 126b can be a standard component, which interfaces between the battery manager 111 (which can communicate with other vehicle components using a CAN bus 115) and the LIICS devices 101 (which use the daisy-chain bus 109). Optionally, the first cell-supervising LIICS device 101 in the daisy-chain bus 109 operates between ground and battery voltage (Vbat), hence it operates at the same voltage levels as the pack controller 126b. This means that the first daisy-chain bus segment does not require the specific voltage-shifting electrical interface of the other daisy-chain bus segments, avoiding the need for an extra interface component. Consequently, low voltage CMOS switching levels can be used to transfer digital information over the first daisy-chain bus interface, reducing the complexity of the client.

As shown in FIG. 1 D, the pack controller 126b can be a standard component, which interfaces between the battery manager 111 (which can communicate with other vehicle components using a CAN bus 115) and the LIICS devices 101 (which use the daisy-chain bus 109). Optionally, as an alternative to the arrangement described in the previous paragraph, the first LIICS device 101a in the daisy-chain bus 109 would not be connected to a battery cell 107 but instead would be connected to a sense resistor 122, and in this arrangement it is able to measure the motor current in the system. The use of the sense resistor 122 is by way of example only and not limitation -- other configurations using different circuit elements, such as a current source or a capacitor, to provide the same functionality also could be provided. As shown in FIG. 1D, the first LIICS device operates between ground and battery voltage (Vbat), hence it operates at the same voltage levels as the communication interface 125 in LIICS 101. This means that the first daisy-chain bus segment does not require the specific voltage-shifting electrical interface of the other daisy-chain bus segments, avoiding the need for an extra interface component. Consequently, low voltage CMOS switching levels can be used to transfer digital information over the first daisy-chain bus interface.

A single-wire interface is used as a low cost solution for transferring the electrical data signals over the daisy-chain bus segments. The single-wire interface between adjacent LIICS devices 101 typically spans only a short distance (e.g. -10 cm) and because the interface operates across the battery cell voltage Vbat (not the full battery pack voltage, which is approximately nVbat, in which n is the number of battery cells in the battery pack and Vbat is the voltage across one such battery cell), the single-wire interface can be routed close to the power leads of the battery-cells without safety issues.

Communication over the daisy-chain bus 109 needs to be bidirectional so that the battery manager 111 can issue commands to the battery cells' LIICS devices 101, and also receive information from those LIICS devices 101.

More specifically, since the host (here, battery manager 111) must take care of initialization and application specific control settings for all the LIICS devices 101, the host must be able to send command information over the daisy-chain bus 109 into the control registers (not shown in FIG. 1 D) of the LIICS devices 101.

The host also must be able to collect information such as status and measurement values from all the LIICS devices 101 over the daisy-chain bus 109 (such information is first stored in the LIICS registers and then is sent to the battery manager 111).

The typical information flow in battery management systems, including that disclosed herein, is very regular. Such information flow is initiated and managed by the battery manager 111. The information can be transferred in fixed-size packets.

The host (battery manager 111) will send command packets to trigger specific actions or set specific parameter values in one or more slave devices (*e.g.,* the LIICS devices 101). The host also can interpret confirmation packets received from the slave devices. Thus, during operation there will be bidirectional information flow.

Slave devices can interpret command packets sent by the host, relay such command packets to the next slave device ("next" meaning, for a particular slave device, the adjacent slave device which is located farther from the host), and will send their confirmation packets towards the host after each command packet is received from the host. Confirmation packets from a slave device will be relayed towards the host by prior slave devices ("prior" meaning, for a particular slave device, the adjacent slave device which is located closer to the host). Other than relaying a confirmation packet from another slave device that is farther from the host, each slave device is not able to directly communicate with other slave devices, meaning one slave device cannot control another.

For any command packet the host sends, the host will receive a confirmation packet from each slave device that forwards the command packet to another slave device (in the absence of such a confirmation packet the host could resend the command packet or trigger an alarm). This stepwise relaying of confirmation packets by successive slave devices toward the host means there will be a significantly higher bandwidth demand for the information-flowing towards the host (battery manager 111) than away from the host.

A half-duplex communication link can efficiently meet the stated data transfer requirements (other communications schemes such as full-duplex communication could also be used). For half-duplex communication, Time Division Multiplexing (TDM) can be used to switch the direction of the information flow on the daisy-chain bus 109, while cycling through the process of sending a command packet (∼1% of the data flow) and receiving confirmation packets (∼99% of the data flow). Bus arbitration is not required.

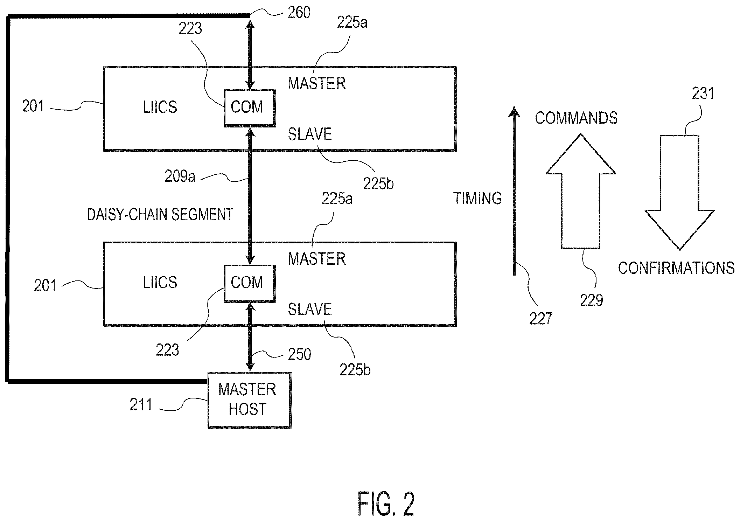

Various aspects and details of data communication on the daisy-chain bus are described with reference to FIGs. 2 through 7 in the following description. For ease of explanation, operation of the communication circuits of the LIICS devices in these figures is primarily discussed with reference to communication of data via respective first ends (250, 350 and 450) of the daisy-chain buses shown in FIGs. 2, 3A, 3B, and 4. For data communication via the second ends (260, 360, and 460) of the daisy-chain buses, the direction in which data and messages are transmitted in the following description is reversed and master/slave terminal designations in the following description are reversed.

FIG. 2 shows two LIICS devices with communication circuits connected in series to form a daisy-chain bus. Regarding communication via the first end 250 of the daisy-chain bus, each daisy-chain bus segment 209a is located between two successive LIICS devices 201, with each bus segment 209a being connected to the master terminal 225a of one LIICS device 201, and to the slave terminal 225b of another LIICS device 201. The respective master and slave terminals 225a, 225b are part of the LIICS device's COM section 223. As shown in FIG. 2, the master and slave terminal designations are defined by the positions of those terminals relative to the host - for each daisy-chain bus segment 209a, the master terminal is the terminal 225a located nearer to the first end 250 of the daisy chain bus and the slave terminal 225b is the terminal located farther from first end 250 of the daisy chain bus. Note that for communication via the second end of the daisy chain bus, these master and slave designations are reversed.

The host 211 is the source of real-time reference signals used by the LIICS devices 201 to affect the transfer of data. The host's timing triggers are propagated through the system from the host to the slaves (in the direction of arrow 227), along with any data being transferred outward from the host to the LIICS devices 201. Only the host 211 can take the initiative to start transactions, transferring command data and confirmation data. As shown in FIG. 2, command data flows in the direction of arrow 229 outward from the host 211, and confirmation data flows in the direction of arrow 231 towards the host 211. Both are timed by timing triggers sent out by the host.

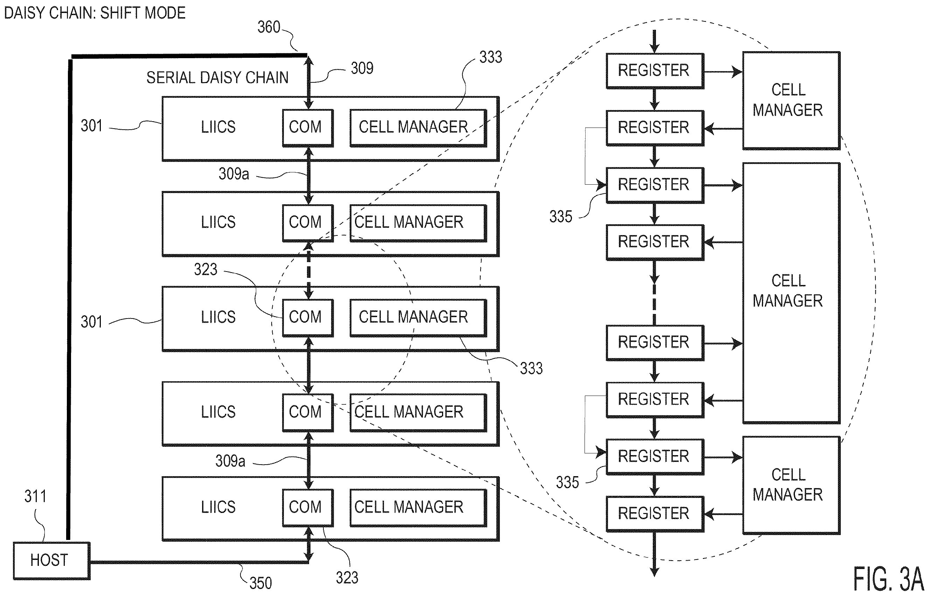

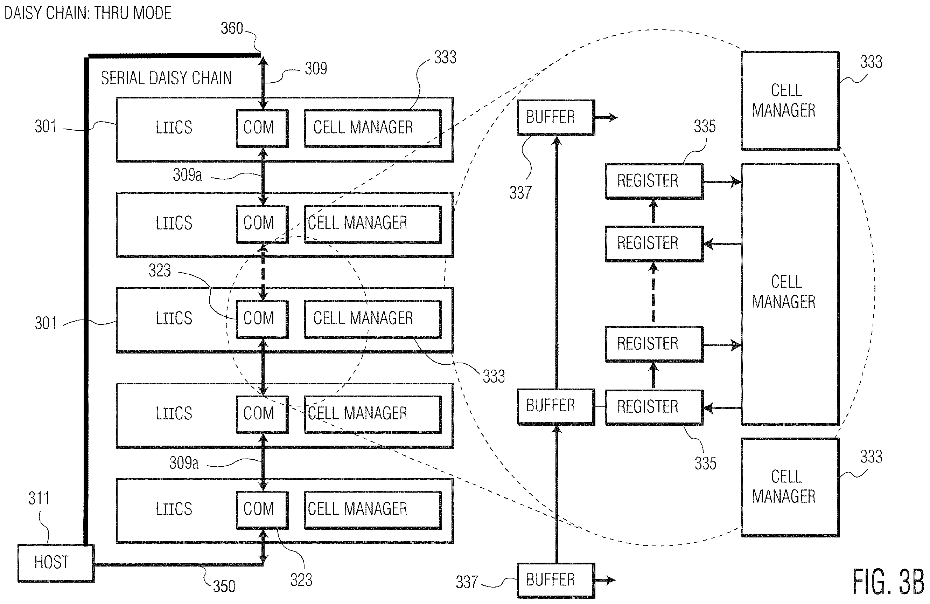

In some embodiments, the communication circuits are configured to perform two modes of data transfer: a shift mode and a through mode. FIGs. 3A and 3B show schematic diagrams reflecting operation of the battery system in shift mode and through mode, respectively. In these figures, a number of LIICS devices 301 connected in series by segments 309a to form a daisy-chain bus having a first end 350 and a second end 360. As described with reference to FIG. 1D, each LIICS device 301 includes a cell manager 333 for monitoring and controlling the associated battery cell (not shown) and a communication circuit 323. Host 311 communicates data to/from the communication circuits 323 via the first and second ends 350 and 360 of the daisy-chain bus. Shift mode is described with reference to FIG. 3A in the following. As already explained, communication from the LIICS devices 301 to the host 311 is performed in shift mode. When all bits of all registers 335 of all LIICS devices 301 are put in series, data can be shifted (transferred) to/from all locations in shift mode, as is shown in FIG. 3A. The data is shifting is controlled by the timing triggers sent by the host. In this case, the addressing of data is implicitly determined by the order of the registers 335 in the LIICS devices 301 and the order of bits in those registers 335. This is beneficial for the efficiency of communication bandwidth. As all elements in the daisy-chain bus of LIICS devices 301 can shift at the same moment in time, all LIICS devices 301 can transfer data in parallel (the data bits move in lockstep), providing a large overall bandwidth in the system. For simplicity, typically all of the data in all of the registers 335 of all the LIICS devices 301 is transferred through the system, including register data which need not be updated. Thus, shift mode is well-suited for sending confirmation messages from the LIICS devices 301 to the host 311. However, in situations where only a small amount of data needs to be transferred, this mode of operation can adversely affect the communication bandwidth. Each LIICS device 301 can interpret the data it receives from the input segment (that being the master terminal or slave terminal, depending upon the direction in which data is flowing) before transferring that data to the output segment. Also, each LIICS device 301 can replace the received input data with alternative output data, specifically, when the input data is not relevant for the following transfers in the chain. If a detected error occurs while sending a command, the response to the corrupted command is not relevant, and can be replaced with more detailed information on the transmission error.

As an alternative to shift mode, data can be transferred in through mode with a minimum latency from one daisy-chain bus segment to the next. Through mode is described with reference to FIG. 3B in the following. To use through mode data transfer, each individual battery communication unit 323 has a data buffer 337. All of the data stored in the registers 335 of a given battery cell manager is transferred via data buffer 337 of that LIICS. In this mode the transferred input data cannot be interpreted, modified or updated before it is transmitted to the next daisy-chain bus segment. Since the data has a low transfer latency, through mode is well-suited for use with command messages, where a single message is sent to all the LIICS devices 301. Specific messages intended for a single LIICS device 301 should be labeled with an address, as this will allow message filtering by the LIICS devices 301.

Returning to FIG. 1D (and also with the other drawings in mind), the dataflow in a battery management system is typically very regular, with the individual battery cell managers periodically reporting the tracked parameters to the battery manager (*e.g.,* temperature and voltage), and the battery manager instructing the battery cell managers when necessary (for example, if the battery manager determines charge bleeding is needed to maintain the battery pack's performance). The battery manager 111 may periodically send command messages towards the LIICS devices 101 about 10 to 100 times/second, sometimes with a device specific setting, but often as a generic command applicable to all LIICS devices 101, such as a routine status inquiry to which the individual LIICS devices 101 reply with various physical parameters (these are typically command messages best sent in through mode). For each command message sent by the battery manager 111, all LIICS devices 101 will reply with a confirmation message sent towards the battery manager 111, such as their status and measurement data.

For optimal performance of the system, through mode data transfer is used for sending command messages from the battery manager 111 to the LIICS devices 101, while shift mode data transfer is used to receive at the battery manager 111 all the confirmation messages with status and measurement values sent by the LIICS devices 101.

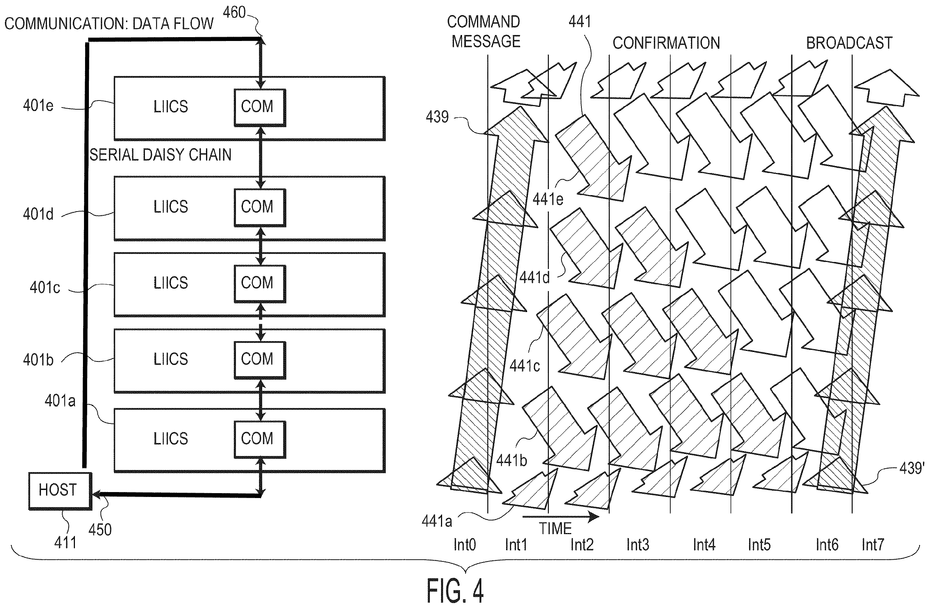

FIG. 4 shows an example data flow in the system over time. Int0-Int6 represent timing intervals during which data is transferred between the depicted devices, A data transmission cycle commences when, at time interval Int0, host 411 initiates a write broadcast command 439, sending data to the LIICS device 401a nearest to the host 411, preferably using through mode communication. While the LIICS device 401a is receiving the commands, it immediately forwards the command to the LIICS device 401 b, which in turn immediately forwards the command to the next device. That broadcast command 439, as it propagates, will be interpreted by one or more LIICS devices 401. All of the LIICS devices 401 reply to the host 411 with their confirmation message, most likely, in shift mode. While five LIICS devices 401a-e are depicted, this is only illustrative, and it will be appreciated that more or fewer LIICS devices could be provided.

In further detail, the broadcast command 439 is shown as a line having a series of slanted upward pointing arrows. The lowest arrow in the Int0 time slot corresponds to the broadcast command as sent by the host 411 to the first LIICS device 401a. The vertical component of the arrow's vector reflects the propagation of the broadcast command from LIICS device 401 a to the adjacent LIICS devices 401 b-e, farther away from the host 411. The horizontal component of that arrow's vector reflects the latency of the broadcast command as it propagates over time (issues of latency are discussed in more detail below). As shown in FIG. 4, the propagating broadcast command 439 reaches the last LIICS device 401e at Int1. Then, following the period Int1-Int5, discussed in detail in the next paragraph, a new command message 439' is sent to LIICS devices 401a-e in like manner.

FIG. 4 also shows the replied confirmation messages 441 a-e (shown as multiple lines having multiple arrows, to reflect the propagation and latency as the messages transfer from one LIICS device to another) from the LIICS devices 401a-e to the host 411. Such transmission is preferably effected using shift mode communication. For present purposes it is sufficient to note that the LIICS devices 401a-e receive timing triggers (not shown) from the host 411. Immediately after the broadcast command message 439 has been received by an LIICS device 401, it starts sending its confirmation message 441 to the host 411. LIICS device 401 a will start sending its confirmation data even before the related command has reached the last LIICS device 401 e. A short time later, the next LIICS device 401 b, after having received the broadcast command message 439 from LIICS device 401a, will start sending confirmation message 441b to LIICS device 401a, which temporarily buffers this confirmation message 441 b, while it is still sending message 441 a. During the next cycle Int2, LIICS device 401a relays confirmation message 441b to host 411. The sending of confirmation messages 441 via the LIICS devices 401a-e continues until, at the end of Int5, all the confirmation message 441 a-e have been propagated to the host 411. It should be understood that the number of LIICS devices 401a-e depicted is only by way of example and not limitation - fewer or more LIICS devices 401 could be provided.

It should be noted that the confirmation message 441 e from the most distant LIICS device 401e reaches the host 411 at the end of Int5. The host 411 then is able to send a new command message 439' to LIICS devices 401a-e starting at the beginning of Int6, and the communication process repeats for that new command message.

The example shown in FIG. 4 is described with reference to communication via the first end 450 of the daisy-chain bus. For data communication via the second end 460 of the daisy-chain bus, the direction of commands (*e.g.,* 439) and confirmation messages 441a-e is the reverse of the above example. If a connection in the daisy chain is faulty (*e.g.,* between 401 c and d), the command message 439 is propagated up to the LIICS devices via the first end 450 and responses 441 c-a propagate down from the LIICS devices 401a-c to the first end of the daisy-chain bus, as shown in FIG. 4. To provide the command 439 to the LIICS 401 d and e, the command is communicated in the reverse direction to these LIICS devices via the second end 460. Responses 441d-e propagate up from LIICS devices 401d-e (in the reverse direction) toward the second end 460.

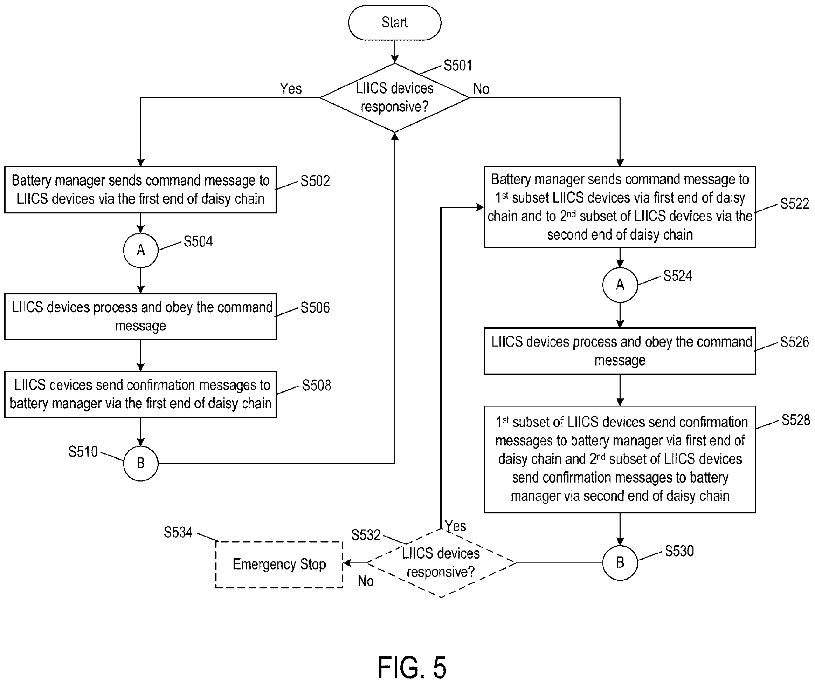

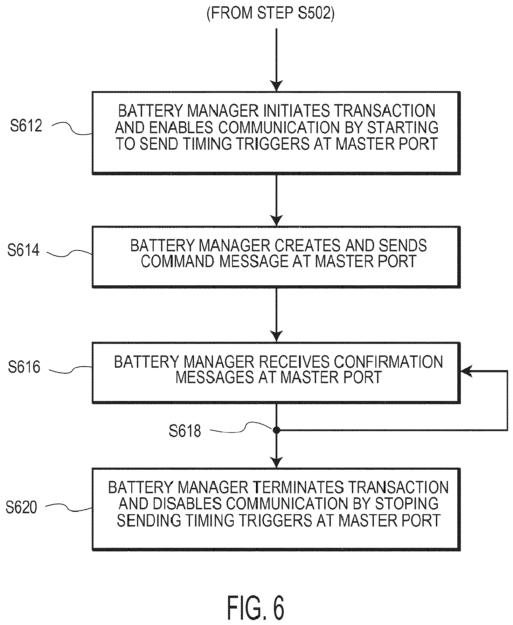

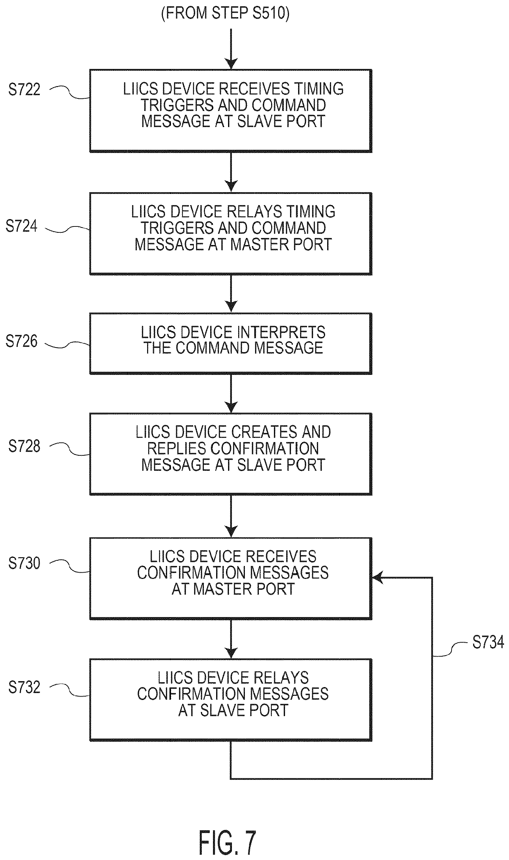

FIG. 5 shows a flowchart for communication of data via first and second ends of a daisy-chain bus, based on responsiveness of communication circuits of LIICS devices in the daisy-chain bus. While communication circuits of each LIICS device are responsive, decision step S501 directs the battery manager and devices to communicate in a first mode via a first end of the daisy-chain bus. In step S502, the battery manager sends a command message to the LIICS devices via a first end of the daisy-chain bus. Step S504 reflects the detailed operations which are involved in such stepwise relaying of the command messages, and those details are shown in Figure 6. In step S506, the LIICS devices process and obey the command message. In step S508, the LIICS devices send confirmation messages to the battery manager via the first end of the daisy-chain bus. Step S510 reflects the detailed operations which are involved in the sending of confirmation messages from the LIICS devices to the battery manager, such details being shown in FIG. 7.

If any LIICS devices are unresponsive, to the command message, decision step S501 directs the battery manager and devices to communicate in a second mode, via both ends of the daisy-chain bus. In step S522, the battery manager sends a command message to a first subset of the LIICS devices via the first end of the daisy-chain bus and sends the command message to a second subset of the LIICS devices via the second end of the daisy-chain bus. Step S524 reflects the detailed operations which are involved in such stepwise relaying of the command messages, and those details are shown in Figure 6. In step S526, the LIICS devices process and obey the command message. In step S528, the first subset of LIICS devices send confirmation messages to the battery manager via the first end of the daisy-chain bus, and the second subset of LIICS devices send confirmation messages to the battery manager via the second end of the daisy-chain bus. Step S530 reflects the detailed operations which are involved in the sending of confirmation messages from the LIICS devices to the battery manager, such details being shown in FIG. 7. This process in the second mode repeats while all of the LIICS devices are determined to be responsive at decision step S532. If any of the LIICS devices becomes unresponsive, an emergency stop is performed at step S534. The emergency stop may include, for example, disconnecting all battery cells from a multi-cell battery circuit.

FIG. 6 depicts various aspects of the relaying of command messages from the battery manager side bus towards the LIICS devices towards the other end of the bus. At step S612, the battery manager initiates a transaction with the nearest LIICS device (101 a in FIG. 1), and enables communication among the LIICS devices by commencing to send timing triggers at the master terminal of the nearest LIICS device (master terminal 225a is shown in FIG. 2). In step S614, the battery manager creates and sends a command message to the master terminal of the nearest LIICS device. Then, at step S616, the battery manager receives confirmation messages at the master terminal. The looping path leading back to step S616 leading away from branch point S618 reflects the processing which occurs as the battery manager iteratively receives confirmation messages from successive LIICS devices. At step S620 the battery manager, having received the last confirmation message from the most remote LIICS device, terminates the transaction and disables communication by stopping the sending of timing triggers at the master terminal.

FIG. 7 depicts various aspects of the relaying of confirmation messages from the LIICS devices to the battery manager. At step S722, the LIICS device receives, at its slave terminal (slave terminal 225b is shown in FIG. 2), timing triggers and a command message. At step S724, the LIICS device relates the timing triggers and the command message via its master port. The LIICS device, in step S726, interprets the command message. At step S728, the LIICS device creates a confirmation message and replies to the battery manager by sending that confirmation message via the slave port. At step S730, the LIICS device receives, at its master port, Sending of the confirmation data is triggered confirmation messages (from other LIICS devices which are more remote from the battery manager). The LIICS device then relays those confirmation messages via the slave port, at step S732. The looping path S734 leading back to step S730 reflects the processing which occurs as the LIICS device iteratively receives successive confirmation messages from the more remote LIICS devices (after the last such confirmation message is received, processing stops for the current message cycle (not shown)).

As the transfer of data over a daisy-chain bus is not infinitely fast, in part because of processing delays in the linked devices which transfer such data, propagation delays will arise. Consequently, transferring a signal over a daisy-chain bus as disclosed will take some time, in part because of time needed for the capturing, buffering and re-transmitting of a signal by one daisy-chain bus segment to the next daisy-chain bus segment.

To improve the reliability of communication in the daisy-chain bus in both directions, each bit is filtered and validated during its complete symbol-period and only after the interpretation of a bit, is the bit relayed to the next LIICS device. This implies that the propagation delay will be a one bit-period, because it takes at least one bit-period to propagate the bit from one LIICS device to the next, meaning the minimum bus segment latency is Tbit (about 4µs, for example). It follows that the minimum time needed for a command message to travel from the host to the last slave device on the bus (*e.g.,* the last of a total of 254 slave devices) is 254*Tbit. For 32 bits/frame communication it follows that the first slave in the chain (and possibly other slaves close to the host) will have finished replying to the host with its confirmation message(s) before the last slave device has detected the beginning of the broadcast command. In other words, there may be a period in which parts of the daisy-chain bus are still idle and slave devices are waiting to receive the host's command message.

A corresponding bus segment propagation delay can occur during the transmission of a confirmation message from a slave device to the host (most likely, performed using shift mode). Such propagation delays may cause problems, as the host must wait at regular intervals before it can capture the response of each LIICS device.

Sending of the confirmation data is triggered (at the LIICS device) by receipt of the broadcast command (sent by the host). As such, for the first daisy-chain bus segment, such confirmation data is returned to the host with a very short timing latency. Yet, for each further remote daisy-chain bus segment, the return of confirmation data takes two additional segment latency periods, as two extra bus segments need to be spanned. As a solution, the communication registers 335 (FIGs. 3A and 3B) are used to compensate for this timing issue, they introduce a delay while shifting through the chain of registers. As long as the communication latency over a single bus segment is less than half the capacity of this shift register, the shift register can compensate for the late response of the more remote LIICS devices. While the shift register is still sending its own confirmation message, the confirmation message of the more remote LIICS is captured and shifted into this same shift register.

A read pointer is defined to locate the position of the local or relayed confirmation data to be sent towards the host. A write pointer is defined to locate the position of the incoming confirmation data, such that it is well-aligned with the timing of outgoing confirmation data. This means that all confirmation messages will arrive at the host as a concatenated stream of data and such confirmation messages will arrive immediately after the host has finished sending a broadcast command.

In some embodiments, a battery management system includes a single master device (host), which takes all initiatives, such as issuing commands and collecting responses. Local cell managers (LIICS devices) are slaves and they only respond to instructions from the host. When the host sends an instruction to one or more of the LIICS devices, the LIICS devices each provide a confirmation that the instruction has been correctly received.

The bus system is configured as a daisy-chain bus in a line topology and includes a host and up to 254 LIICS devices and bus segments. The LIICS devices and the bus segments both introduce a timing latency. This latency corresponds to one bit period per bus segment.

In an application where a single LIICS device would be addressed, both upstream and downstream delays should be taken into account. It would be very complex to support a generic message acknowledgement service, as these latency delays can be rather long and vary with the distance between the host and a particular LIICS device "LIICS(n)" (where n is expressed as the number of segments between the particular LIICS device and the host). With each individual LIICS device (LIICS, LIICS(1), LIICS(2).... LICS(n)..., LICS(254)) sending an acknowledgement message immediately after receiving an instruction, the related latency and latency variations caused by up to 254 acknowledgement messages being transmitted by the LIICS devices would make the system very complex.

A more advanced implementation is for each LIICS device to send its acknowledgement towards the host in combination with regular confirmation data. Each message sent by the host to one or more LIICS devices will cause every LIICS device to return a message, toward the host, that includes both acknowledgement and status information. As the amount of messages to be send by the host is rather limited and often requires the return of a large amount of data, both the overhead and complexity of this acknowledge method are quite reduced, as compared to a generic message acknowledgement service mentioned above.

Also, in instances where commands are sent that would not require the return of data to the host (*e.g.,* commands from the host which might only set control data or trigger an event at the LIICS devices), each LIICS device still will send a confirmation message. In this case, at least a partial copy of the transmitted payload data is returned to the host, which can be used by the host to determine whether the sent data arrived correctly at the desired LIICS device, thereby increasing the reliability of the system.

In some embodiments, the LIICS cell supervisors are slaves and only respond to instructions from the master device. This type of system may require two types of interrupts: (1) the master device (host or battery controller) forcing control over the (locked) system; and (2) a slave, *e.g.,* the LIICS device, requesting a service due to an alarm condition.

If, while sending a command, the master wants to send an interrupt to one or more slave devices, it waits until it has completely sent the command, and also waits until all slaves have confirmed this message. However, this wait period may be too long if an interrupt needs to be served on short notice, *e.g.,* in case of an emergency stop. In such a situation, the master can abort the current transaction by stopping the sending of the related symbols, containing timing triggers. Next, the master can issue a new command to one or more LIICS devices containing the interrupt information.

By way of non-limiting example, an LIICS device may need to request the attention of the host due to a specific condition, *e.g.,* an over/under voltage in a battery cell, an over/under battery cell temperature, or a communication error. In a battery management system these requests typically allow for a response latency of a few seconds during operation (while driving or charging), and up to a few hours when the system is idle (while parking and not charging).

The host is able to detect a service requesting LIICS device by either an interrupt mechanism or continuous polling. An interrupt mechanism requires an (independent) medium to transfer the request. Depending on the physical implementation of a battery manager interface, a possible implementation for such an interrupt mechanism could be to modulate the requests in a full-duplex channel over a transmission medium, *e.g.,* by sending a specific frequency over the single wire, to be detected by the master. However, according to various design considerations for the battery pack, it may not be feasible to provide additional wiring for this purpose.

For the above reasons, the continuous polling approach may be preferred in some applications. As the battery manager typically requests a continuous stream of measurement data from the LIICS devices, the polling of interrupt requests may be included in the regular transfer of these data packets, which already include device identification information. For this purpose, some extra information can be stored in a data packet.

In the situation where a LIICS device requests service from the host, a service request flag is set, requesting attention from the master. When the request is urgent, due to an emergency condition, the content of the confirmation packet sent by the LIICS device to the host can be replaced with additional status information on the emergency condition. In this way, the master need not request this additional data in a separate command, reducing the interaction latency. In the packet sent to the host by the LIICS device, an acknowledge flag is set to false, to identify to the host that there is an exception, and a status flag is set to signal to the host that there is a pending service request. These flags are not part of the payload data.

The host device typically captures measurement data from all of the LIICS devices at a rate of about 10 samples per second, which is a sampling rate that should be sufficient to meet the timing requirements for interrupt requests.

The embodiments described above are well-suited for use in a battery management system wherein each battery cell includes an integrated circuit which can accurately and effectively monitor all relevant parameters of the battery cell. In such a system, each battery cell is controlled by an LIICS circuit, which can enable new features through the local measurement and preprocessing of data derived from the battery cell.

An application specific communication bus, as described herein, permits the transfer of control data from the battery manager (host) towards the LIICS devices (slaves), and the transfer of measurement data from the LIICS devices back towards the battery manager. Only the LIICS devices employ the daisy-chain bus interface with a PHY containing a dedicated level-shifter. As this daisy-chain bus node does not required level-shifting, the host PHY can be implemented using standard digital interface components. As shown in FIG. 1C, battery manager 111 can include a CAN transceiver, facilitating communication between the battery manager and other vehicle components such as various control modules and data recorders (not shown).

The embodiments described herein are not limited to electrical vehicles, and can also be employed in other application domains, *e.g.,* Uninterruptable Power Supplies (UPS) and photovoltaic energy storage systems.

Various blocks, modules or other circuits may be implemented to carry out one or more of the operations and activities described herein and/or shown in the figures. In these contexts, a "block" (also sometimes "logic circuitry" or "module") is a circuit that carries out one or more of these or related operations/activities. For example, in certain of the above-discussed embodiments, one or more modules are discrete logic circuits or programmable logic circuits configured and arranged for implementing various elements shown in the figures and processes discussed above. In certain embodiments, such a programmable circuit is one or more computer circuits programmed to execute a set (or sets) of instructions (and/or configuration data). The instructions (and/or configuration data) can be in the form of firmware or software stored in and accessible from a memory (circuit).

For additional information, regarding processes and circuits for communication between devices (battery sections and LIICS) over a bi-directional communication bus (*e.g.,* a daisy-chain), reference may be made to U.S. Application No. 13/938416, filed July 10, 2013. Reference may also be made to a concurrently filed U.S. Application, having attorney docket number 81537364US02 and titled DAISY-CHAIN COMMUNICATION BUS AND PROTOCOL. For example, with reference to FIGs. 1, 2, 3A, 3B and 4, the U.S. Application No, 13/938416 describes communication between a battery manager (host) and a plurality of communications connected in a daisy-chain. As another example, with reference to FIGs. 2A and 2B, the concurrently filed U.S. Application (attorney docket number 81537364US02), describes processes and circuits for synchronization of communications over a daisy-chain communication bus.

Based upon the above discussion and illustrations, those skilled in the art will readily recognize that various modifications and changes may be made to the various embodiments without strictly following the exemplary embodiments and applications illustrated and described herein. For example, aspects discussed herein may be combined in various combinations to form different embodiments.

## Claims

1. An apparatus comprising:
a plurality of battery sections (130), each including:
a battery cell (132);
a first connection node (134) and a second connection node (135), the plurality of battery sections connected to form a daisy-chain bus having a first end, a second end, and the plurality of battery sections connected in series via the first and second connection nodes between the first and second ends; and
a communication circuit (131) connected to the battery cell and configured to communicate cell-status data characterizing the battery cell over the daisy-chain bus, by communicating the cell-status data via the first connection node, and in response to an indication that the daisy-chain bus is faulty, by communicating the cell-status data via the second connection node;
a battery manager circuit (150) configured to control the plurality of battery sections based on the cell-status data characterizing cells of the plurality of sections; and
a communication interface circuit (141) coupled to the battery manager circuit and the first and second ends of the daisy-chain bus, and configured and arranged to communicate data between the battery manager circuit and the communication circuits of the plurality of sections via the daisy-chain bus.

2. The apparatus of claim 1, **characterized in that** the communication interface circuit is configured to:
while operating in a first mode, communicate the data between the battery manager circuit and each of the communication circuits via the first end of the daisy-chain bus, and transition to a second mode in response one or more of the communication circuits becoming unresponsive; and
while operating in the second mode,
communicate the data between the battery manager circuit and a first subset of the communication circuits via the first end of the daisy-chain bus, and
communicate the data between the battery manager circuit and a second subset of the communication circuits via the second end of the daisy-chain bus.

3. The apparatus of claim 2, **characterized in that** the battery manager circuit is configured to
detect unresponsive ones of the communication circuits by:
transmitting a first data command to each of the communication circuits via the communication interface circuit, and
determining ones of the communication circuits that do communicate data to the battery manager circuit in response to the first data command; and
in response to detecting one or more unresponsive ones of the communication circuits, causing the communication interface circuit to operating in the second mode.

4. The apparatus of claim 1, **characterized in that** each of the communication circuits is configured to:
in response to receiving a first data command via the first connection node,
communicate the cell-status data via the first connection node to the battery manager circuit, and
communicate the first data command via the second connection node to the battery manager circuit; and
in response to receiving the first data command via the second connection node,
communicate the cell-status data via the second connection node to the battery manager circuit, and
communicate the first data command to via the first connection node to the battery manager circuit.

5. The apparatus of claim 4, **characterized in that**:
each of the plurality of sections has a respective unique identifier; and
the communication circuit is further configured and arranged to, in response to receiving a second data command via a first one of the first and second connections nodes,
communicate the second data command via the other one of the first and second connection nodes,
in response to the second data command indicating the respective unique identifier of the first one of the plurality of sections that includes the communication circuit, communicate the cell-status data via the first one of first and second connection nodes, and
in response to the second data command indicating the respective unique identifier of the another one of the plurality of sections, communicate an acknowledgement message that does not include the cell-status data.

6. The apparatus of claim 1, **characterized in that** each of the plurality of sections further includes a monitor circuit coupled to the respective battery cell and configured and arranged to provide the cell-status data to the respective communication circuit, the cell-status data including at least one a set of measurements including: current of the respective battery cell, voltage of the respective battery cell, and temperature of the respective battery cell.

7. The apparatus of claim 1, **characterized in that**:
the battery manager further is configured to detect if one or more of the plurality of sections in the daisy-chain bus become unresponsive; and
in response to detecting that one or more of the plurality of sections are unresponsive, disable communication between the one or more of the plurality of sections and other ones of the plurality of sections by sending a specific data command which includes a unique identifier corresponding to the one of the plurality of sections adjacent to the unresponsive ones of the plurality sections in the daisy-chain bus.

8. The apparatus of claim 1, **characterized in that** each of the communication circuits is configured to:
communicate data via the first and second connection nodes using a master-slave communication protocol;
in response to receiving a first data command via the first connection node, operate the first connection node as a master-interface and operate the second connection node as a slave-interface; and
in response to receiving the first data command via the second connection node, operate the first connection node as a slave-interface and operate the second connection node as a master-interface.

9. An apparatus comprising:
a manager circuit (150); and
a plurality of sections (130), each comprising
a respective cell (132) and a respective communication circuit (131) connected to the cell and configured to communicate cell-status data characterizing the cell in a first direction over a bi-directional daisy-chain bus to the manager circuit and, in response to an indication that the bi-directional daisy-chain bus is faulty, by communicating in a second direction over the bi-directional daisy-chain bus to the manager circuit.
